# EUROPEAN PATENT SPECIFICATION

(11) **EP 0 922 592 B1**
(45) Date of publication and mention of the grant of the patent: **17.12.2003**
(21) Application number: 98110354.2
(22) Date of filing: 05.06.1998
(51) Int. Cl.: B60C 15/02, B60C 5/22, B60C 15/04, B60C 3/04

(54) **Tyre wheel and its components**
Rad mit Reifen und Komponenten
Roue équippée d'un pneumatique et ses composants

(30) Priority: 14.11.1997 EP 97830600; 19.02.1998 EP 98830079
(43) Date of publication of application: 16.06.1999
(73) Proprietor: PIRELLI PNEUMATICI Società per Azioni, 20126 Milano (IT)
(72) Inventor: Caretta, Renato, 21013 Gallarate (VA) (IT)
(74) Representative: Giannesi, Pier Giovanni

(56) References cited:
- EP-A- 0 170 085
- EP-A- 0 590 481
- WO-A-94/13498
- FR-A- 2 348 066
- FR-A- 2 608 514
- US-A- 5 634 993

## Description

The present invention relates to a tyre wheel for vehicles, i.e. to the assembly comprising a mounting rim designed for connection to a hub of the vehicle itself, a tyre mounted on said mounting rim and an inner tube inserted inside said tyre, designed to be inflated with a fluid under pressure via a special inflating device.

More particularly, the invention relates, albeit not exclusively, to a tyre wheel for use on motor vehicles with very high performance features, i.e. vehicles which are able to produce a high driving torque and reach high speeds both along straight road sections and around bends.

The tyre wheels of the type described must be able to satisfy fully various requirements - also partly conflicting with one another - which are associated with the performance features required by the market today.

In particular they must be able to provide the vehicle with an excellent handling performance - particularly as regards the directional and transverse stability -, road-holding power and traction on any type of ground, resistance to aquaplaning, comfort, as well as the capacity to continue travelling over a reasonable distance also in the case of partial or total loss of air (run-flat conditions), without the risk of "unseating", i.e. the condition where one or both of the tyre beads comes out of the associated seat formed on the rim.

The Applicants have noticed that, hitherto, these requirements have generally been satisfied individually by a single component from among those which make up the wheel: thus the handling has been attributed to the performance features of the tyre, while the resistance to "unseating" has been sought after by means of suitable shaping of the bead seats. As regards the so-called "run-flat capacity", according to a first method, this has been obtained by modifying the carcass structure, strengthening the sidewalls of the tyre so as to provide it with a self-supporting capacity; by way of an alternative, in tubeless tyres this capacity has been provided by suitable supports mounted on the rim and inserted inside the tyre, while in tyres with inner tubes an air chamber, or inner tube, divided up into a plurality of circumferential or transverse compartments independent of one another has been used.

The presence of several independent compartments allows the tyre to be provided with a sufficient inflation pressure, and hence capacity for emergency travel, even when one of said compartments has suffered a puncture.

It has been found that all these solutions, compared with the advantages offered, also have various disadvantages, such that the overall result obtained is penalized.

In particular, the Applicants have noticed that:
the increase in the structural rigidity of the sidewalls results in a greater weight of the tyre and a greater rigidity thereof in all directions - longitudinal, transverse and vertical - which has a negative effect on the driving performance under normal conditions, and on the comfort;
the use of a support inside the tyre increases the weight of the tyre and does not provide any guarantee as to long resistance during run-flat conditions, when the weight of the car is transmitted onto the support with frictional contact between the radially internal surface of the tyre and the radially external surface of the support; and
the solution with inner tube is not practical with so-called low-profile tyres, i.e. those tyres which have an elliptical cross-section elongated along the axis of rotation, in which difficulties both as regards insertion and use are encountered.

The Applicants have been able to establish, in fact, that the insertion of the inner tube between tyre and rim is all the more difficult the lower the cross-section of the tyre. In addition to this, traditional inner tubes, during inflation, assume a profile which is substantially circular in cross-section and does not combine properly with the elliptical profile of the low-profile tyre, resulting in folds which form on top of one another and prevent correct and complete extension of the walls of the inner tube onto the internal surface of the toroidal cavity, in particular along the sidewalls of the tyre. In this way the toroidal cavity is not filled properly and a damaging state of internal tensions in the wall of the inner tube arises, adversely affecting the duration thereof.

Furthermore, as perceived by the Applicants, further problems are associated with the fact that traditional inner tubes are provided with an inflating valve comprising a stem which passes through the rim for connection to the external environment outside the wheel. In particular travel conditions of the tyre, this fact represents a risk which at present has not yet been eliminated: it has been found that, in the case of sudden accelerations or decelerations of the vehicle, such as those which are produced by high-performance vehicles which transmit to the ground very high torque values, slipping of the tyre with respect to the rim may occur, with consequent tearing of the inner tube at the base of the valve or shearing of the valve stem. When this occurs, there is an immediate deflation of the tyre and associated loss of stability of the vehicle, with serious danger for the lives of the driver and passengers of the vehicle itself.

Even the most recent proposition to improve the behaviour of the abovementioned tyre wheels as regards the run-flat capacity, and resistance to unseating has not diverged from the known art, envisaging a solid insert inside the cavity defined by the rim and tyre assembly.

For the sake of convenience of the description, it is pointed out here that this assembly has a mounting rim which is provided with conical bead seats whose axially external end has a diameter less than that of the axially internal end and is associated with a radial carcass tyre, the beads of which match the corresponding seats on the rim while the carcass has a meridian profile, in cross-section, with a constant direction of curvature, the tangent of which, in the vicinity of the bead cores, is substantially parallel to the equatorial plane.

In the embodiment proposed, the rim has bead seats of different diameter and the bead seat of larger diameter is delimited in an axially internal position by a shoulder which is of considerable height so as to prevent unseating on that side, but is difficult to pass over. The wheel is completed with a tread support ring radially extending over about half the cross-section height of the tyre: the ring is fitted onto the rim, in the vicinity of the bead seat of smaller diameter and, in the event of deflation of the tyre, locks in position the adjacent bead, preventing unseating of the tyre on the corresponding side. This wheel is described in detail for example in US Patent No. 5,634,993, to which reference should be made for further information.

GB 2,104,012 A discloses an inner tube for a pneumatic tyre divided into three annular compartments by two dividing walls which are of bellow-like construction so as be capable of sealing against an outer wall of the tube in the event of deflation of compartments. A valve is provided for simultaneous inflation/equalisation of the compartments via inlets.

US 4,216,809 discloses a run-flat insert structure for a pneumatic tyre, in which the insert structure comprises a homogeneous elastomeric material and is fully enclosed and pneumatically inflated. During the deflated condition of the tyre, the insert structure supports the tyre and its load at a deflection that prevents excessively rapid deterioration of the tyre while running in the deflated run-flat condition.

The Applicants have realized that these solutions are also not completely satisfactory in relation to the high standards of quality and performance which are nowadays required by the market, i.e. by vehicle manufacturers, by tyre retailers and by the users themselves. In particular they have perceived that the version without tread support results in the return to tyres with reinforced self-supporting sidewalls, while the internal solid support ring reduces the volume of inflating air which is already small in low-profile tyres, thereby reducing the comfort, limits the vertical deformability of the tyre, adversely affecting the driving performance, increases the thermal mass forming a harmful barrier against the dissipation of the heat produced during use, and requires a particular constructional form of the rim, which results in the need for a different diameter of the bead seats of the rim, making assembly and disassembly of the ring in particular, and the wheel assembly in its entirety, difficult.

All this having been stated, the Applicants have now discovered that the performance characteristics of a vehicle tyre wheel may be further improved by using an assembly of partly known and partly new elements, which forms a tyre system capable of developing a mutual interaction between them, resulting in a new vehicle tyre wheel which satisfies at the same time and in an optimum manner the performance characteristics required by modern vehicles.

The aforementioned wheel comprises essentially a wheel rim with bead seats which are inclined towards the axis of rotation, proceeding axially outwards away from the equatorial plane; a tyre provided with beads externally shaped in the manner of the corresponding seats on the rim and with a carcass profile, viewed in cross-section, which has its maximum axial width in the region of said beads which are preferably formed with a new structure for fixing the carcass ply to the bead reinforcing core; and an inner tube, which preferably has an elliptical cross-section and which can be inflated by means of an inflation device which does not have any element for connection to the environment outside the wheel, in particular passing through the wall of the rim.

The invention therefore relates to a tyre wheel for vehicles, according to claim 1.

The abovementioned tyre wheel is provided, on the rim, with means for introducing and removing fluid under pressure respectively into and from the toroidal cavity defined between tyre and rim.

Preferably, the angle at the apex of said conical surfaces of the bead seats is between 8° and 60°. The abovementioned bead seats are axially delimited towards the outside each by a flange diverging in a direction radially outside the rim and inclined with respect to the equatorial plane at an angle of between 40° and 50°, while towards the inside they are each axially delimited by a shoulder, the axially external surface of which converges towards the equatorial plane in a direction radially outside the rim and is inclined with respect to said plane at an angle of between 0° and 30°.

Even more preferably, the difference between the maximum diameter of said central portion, on the radially external surface of the abovementioned cylindrical body, and the minimum diameter of said bead seats is between 10% and 20% of said minimum diameter; the difference between the external diameter of said flange and the minimum diameter of the corresponding bead seat is between 1% and 5% of the value of said minimum diameter.

According to a second aspect thereof, the invention also relates to a tyre wheel as described, in which the bead seats have a different distance from the axis of rotation of said wheel, where the difference between the minimum diameter of the bead seat of larger diameter and the maximum diameter of the bead seat of smaller diameter, which is axially opposite, is between 3% and 6% of the value of said maximum diameter.

Preferably, in this case, the rim is designed for mounting on the vehicle with the bead seat of larger diameter facing the vehicle itself.

According to a different aspect thereof, the invention relates to a tyre wheel of the type described, fitted with a tyre in which the bead reinforcing core comprises at least two radially superimposed layers of metal wires which are wound in turns arranged axially alongside one another and extending substantially over the entire axial extension of the corresponding bead seat and are arranged substantially parallel to the surface of the bead seat, where the minimum diameter of the radially innermost layer is not less than the diameter of the adjacent flange and its maximum diameter is not greater than the diameter of the adjacent shoulder.

The layers are preferably formed by high carbon content steel wires and may consist of a spiral of a single metal wire, with a diameter of between 0.9 mm and 1.5 mm, or a spiral of stranded metal cord where the basic filament of said strands has a diameter preferably of between 0.22 mm and 0.38 mm.

The bead core may comprise either layers consisting of basic filaments or layers of cords or a combination of said layers.

With this type of bead core, preferably the end of the carcass ply is inserted, axially from the inside outwards, between said layers.

In a preferred embodiment in which the end of said carcass ply comprises two axially separate portions of fabric, a first portion of fabric is arranged in position radially inside the radially innermost layer of metal wires, while the second portion of fabric is inserted in position radially inside the radially outermost layer of said wires, separated from the radially innermost layer by an insert of elastomeric material which extends radially beyond the axially internal end of said layers of metal wires towards the sidewall of the tyre and which has a hardness of not less than 70° Shore A.

According to a further aspect thereof, the invention relates to a tyre wheel as described, in which the inner tube has been moulded and vulcanized with a toroidal shape having an internal volume not less than one third of the final volume of use, and has preferably been moulded and vulcanized with an elliptical shape.

The inner tube comprises at least two circumferential volumes which are separate and independent of one another, being separated by a longitudinal wall extended in a plane perpendicular to the axis of rotation of the wheel, each volume being provided with said inflating device. This wall has a rigidity which is greater than that of the axially outermost part, i.e. the sidewalls, of said inner tube. In addition or by way of alternative, this wall contains at least one duct which extends internally over the whole radial extension of the wall, opening out on both the extrados and intrados surfaces of the inner tube.

According to yet another aspect thereof, the invention relates to a tyre wheel as described, in which said inflating and deflating device comprises a rigid body incorporating at least one inflating valve, one calibration valve and one discharge valve.

In any case the present invention will now be better understood with reference to the description which follows and to the accompanying figures, provided solely by way of explanation and without being intended as limiting in any way, in which:
Figure 1 shows a partial cross-sectional view of the wheel according to the invention in a preferred embodiment, including a new bead structure for the associated tyre;
Figure 2 shows the wheel according to Figure 1, without inner tube, in a second embodiment both of the rim and of the beads of the tyre;
Figure 3 shows, again in cross-section, an example of a preferred embodiment of the inner tube according to the invention;
Figure 4 shows the wheel according to the invention, after assembly of the component elements, prior to inflation of the inner tube;
Figures 5 to 7 show three different views, respectively an axial cross-sectional view and two separate sections perpendicular to the axis, of a preferred embodiment of the device for inflating the inner tube.

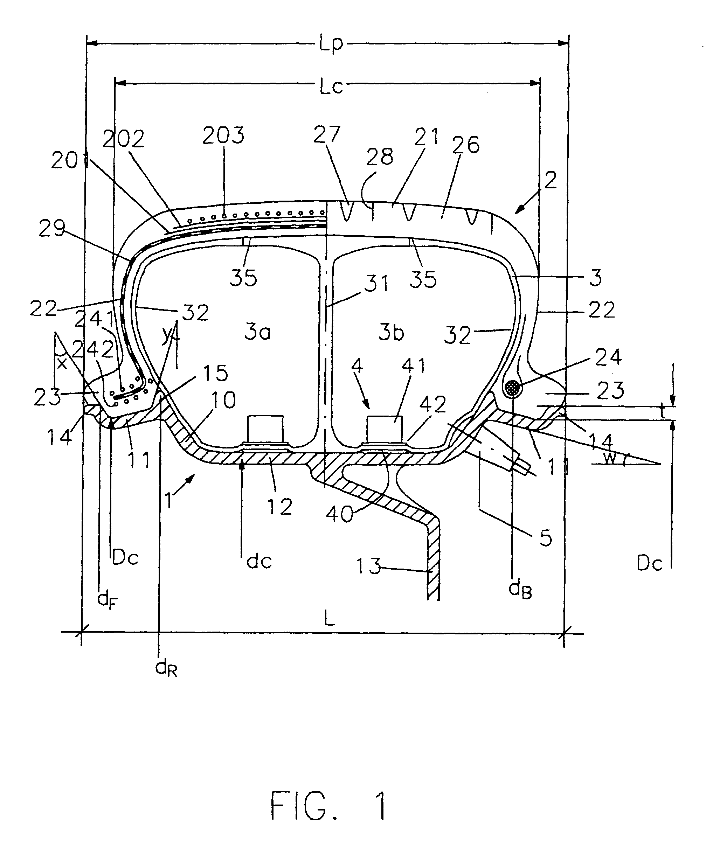

With reference to Figure 1, the wheel according to the invention comprises a mounting rim 1 on which a tyre 2 is mounted: the toroidal cavity defined between the internal surface of the tyre and the radially external surface of the rim contains an inner tube 3 provided with at least one inflating device 4 which can be inflated by means of the introduction of air from outside the rim via a special valve 5. The abovementioned inner tube, which is dilated owing to the effect of the inflating pressure, occupies the entire cavity and rests against the aforementioned surfaces of the tyre and the rim.

The rim 1 comprises a substantially cylindrical body 12, the axis of which (not shown) forms the axis of rotation of the wheel and which is connected to a disc 13 lying in a plane perpendicular to the axis of rotation and having the function of fastening the rim, and hence the wheel, to a hub of the vehicle.

The radially external surface of the abovementioned body has two side portions 11 which are designed to form the bead seats for engagement with corresponding beads of the tyre and are each arranged according to a conical surface with its apex on the axis of rotation, in a position axially outside the seat with respect to the rim, and a radially more inward central portion, with a maximum diameter less than the minimum diameter of the bead seats.

More precisely, the radially external diameter D_{c} of the axially external end of the bead seat 11 identifies the fitting diameter of the tyre and is taken as being the nominal diameter of the rim: the radially external surface of the abovementioned central portion of the rim has a diameter d_{c} with a value preferably of between 80% and 90% of D_{c}.

Preferably, the angle at the apex of said conical surfaces of the bead seats is between 8° and 60°, i.e. the angle w of said conical surfaces with respect to the axis of rotation is between 4° and 30°; in the example illustrated it is equal to 15°, being the same for both the seats. Moreover the angle of one seat may also be different from that of the other seat, should this prove to be more advantageous, although it is preferably always within the range of the values specified above.

The bead seats are axially delimited towards the outside each by a flange 14 preferably diverging in a direction radially outside the rim and inclined with respect to the equatorial plane at an angle x, which is preferably between 40° and 50° and in the example illustrated is equal to 45°, being the same for both flanges. Moreover the angle of one flange may also be different from that of the other flange, should this be more advantageous, although it is preferably always within the range of the values specified above.

The radially external diameter d_{F} of said flanges exceeds the nominal diameter of the rim by a value preferably between 1% and 5% of said nominal diameter.

The bead seats are axially delimited towards the inside each by a shoulder 15 with an axially external surface preferably converging towards the equatorial plane in a direction radially outside the rim and inclined with respect to said plane at an angle y which is preferably between 0° and 30° and which, in the example illustrated, is equal to 15°, being the same for both shoulders. Moreover the angle of one shoulder may also be different from that of the opposite shoulder, should this be more advantageous, although it is preferably always within the range of the values specified above.

The value of the radially external diameter d_{R} of said shoulders is preferably between 106% and 108% of the value of the nominal diameter.

The radially more inward central portion of the rim is connected to the abovementioned bead seats by means of two walls 10 which are preferably diverging and radially extended outwards and which, together, define a channel useful for facilitating mounting of the tyre and inner tube onto the rim: in a wall of the channel there is advantageously formed a hole in which an inflating valve 5 of the type commonly used with tubeless tyres is mounted.

The maximum axial distance between the abovementioned flanges 14 defines the width L of the rim.

The tyre 2 comprises a toroidially shaped carcass having a peripheral portion 21 and two axially opposite sidewalls 22 terminating in a pair of beads 23, each provided with at least one reinforcing bead core 24 for fixing the tyre to the corresponding mounting rim 1.

A tread band 26 is located on the periphery of said carcass and is moulded with a design in relief comprising grooves 27 and cuts 28, in a manner known per se, which are varyingly arranged depending on the type of use envisaged for the tyre.

The carcass is provided with at least one reinforcing ply 29 extending from bead to bead, with its ends fixed to the abovementioned bead cores.

If the tyre is of the radial type, the reinforcing cords of the abovementioned ply lie substantially in planes containing the axis of rotation of the tyre; moreover, between the carcass and the tread band there is inserted a belt structure comprising preferably at least two radially superimposed layers 201 and 202 of metal cords which are parallel with one another in each layer and intersecting with those of the adjacent layer and which are inclined, preferably in a symmetrical manner with respect to the equatorial plane of the tyre. Even more preferably, the abovementioned structure, in a radially external position, also comprises an additional layer of textile cords 203 which are advantageously made of heat-shrinkable material and are arranged parallel to the equatorial plane.

The angle of inclination of the cords of the intersecting belt layers, with respect to the equatorial plane, is preferably between 5° and 30°: in connection with specific embodiments of the belt structure and/or tyre the abovementioned angle may also have a different value in the two layers.

The abovementioned tyre has its maximum width L_{P} at the point corresponding to the maximum axial extension of the beads, and this width is at least equal to, but preferably greater than, the maximum width L_{c} measured on the sidewalls of the tyre.

In other words, the external profile of the cross-section of the tyre does not extend axially beyond the external edge of the flange 14 of its mounting rim.

The bead of the tyre is externally shaped so as to match at least the profile of the bead seat and the adjacent walls of the flange and the shoulder: however, preferably it extends in an axial direction outwards so as to cover also the radially external surface of the flange 14.

The internal structure of the bead may comprise a reinforcing bead core 24 made with one of the various known structures, for example of the bunched type or twisted type; in any case the radially internal diameter d_{B} of said bead core must have a value not less than d_{F} and not greater than d_{R}.

Figure 1 illustrates, in the left-hand half, a particular preferred embodiment of a bead structure, according to the invention.

In this embodiment the bead core comprises at least two radially superimposed layers 241 and 242 of metal wires which are wound in turns arranged axially alongside one another and extending substantially over the entire axial extension of the corresponding bead seat, while the end of the carcass ply is inserted, axially from the inside towards the outside, between the abovementioned layers.

The layers are arranged parallel to the axis of rotation or, more preferably, substantially parallel to the bead seat. For the radially innermost layer the condition already described for the traditional bead wire also applies: basically its minimum diameter must not be less than d_{F} and its maximum diameter not greater than d_{R}.

The layers are formed by wires made of steel with a high carbon content (type HT, i.e. with a carbon content greater than 0.8%). Each layer may be formed by a spiral of a single metal wire with a diameter of between 0.9 mm and 1.5 mm. Preferably the layer is formed by a spiral of stranded metal cord comprising preferably seven strands each with three basic filaments. The basic filament of the strands preferably has a diameter which is between 0.22 mm and 0.38 mm, and even more preferably equal to 0.28 mm or alternatively to 0.36 mm. In other words, the preferred cords for the formation of said layers, according to the usual method of identification in the sector, are 7x3x0.28 and 7x3x0.36. The bead core may comprise either layers of single wires or layers of cords or a combination of said layers.

The embodiment with metal cords is preferred in order to provide the bead core with the necessary flexibility, during mounting and removal of the tyre onto/from the rim, such that the flange 14 of the rim can be passed over without any structural damage being suffered.

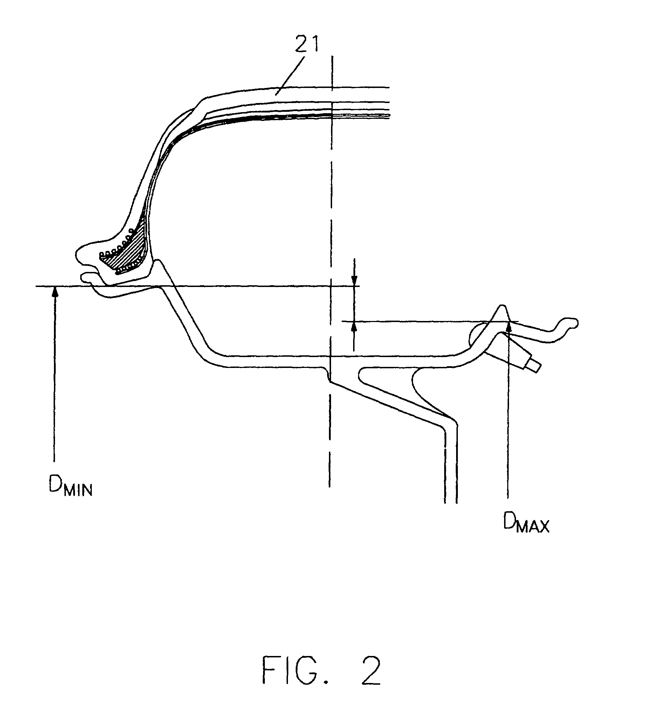

Figure 2 shows a second advantageous embodiment of the wheel according to the invention, which differs from that already described owing to the fact that the bead seats have a different diameter. In particular the difference between the diameter D_{MIN} of the bead seat of larger diameter and the diameter D_{MAX} of the bead seat of smaller diameter, which is axially opposite, is preferably between 3% and 6% of the value of the nominal diameter.

With this embodiment the minimum diameter of the bead seat of smaller diameter is taken as being the nominal diameter of the rim and the wheel is preferably mounted on the vehicle with the bead seat of larger diameter located on the vehicle side.

The figure also shows a different embodiment of the bead of the tyre distinguished by the fact that the reinforcing carcass comprises two carcass plies or in any case the end of the ply is separated into two axially separate portions of fabric: in this case a first fabric portion is arranged in position radially inside the radially innermost layer of metal wires, while the second fabric portion is inserted in position radially inside the radially outermost layer of said wires, being separated from the radially innermost layer by an insert of elastomeric material with a high hardness factor which extends radially beyond the axially internal end of the layers of metal wires towards the side of the tyre. The hardness of said insert is preferably equal to, or even more preferably, greater than 70° Shore A.

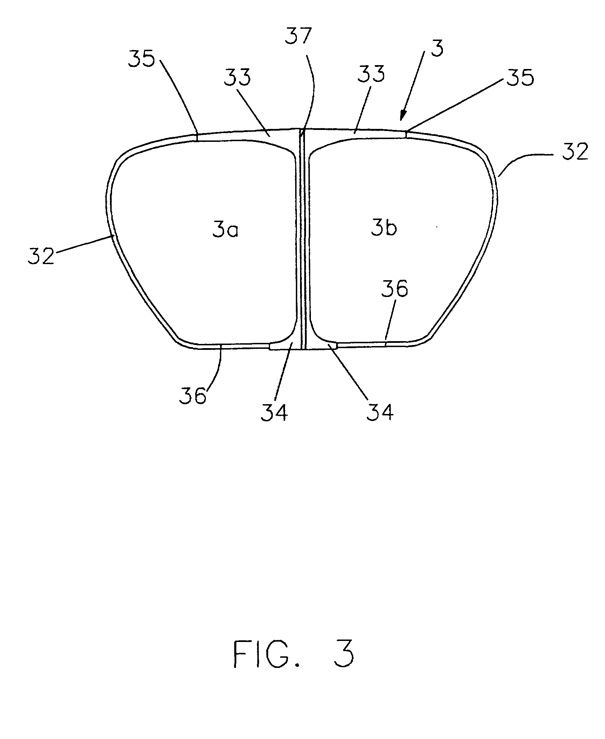

As regards the diameters of the radially innermost layer, the same conditions already mentioned when illustrating the embodiment according to Figure 1 apply.
The inner tube 3 illustrated in Figures 1 and 3 is preferably an inner tube which is made of elastomeric material and is divided up into at least two parts separate from one another, i.e. a central core comprising a wall 31 and a pair of sidewalls 32.

In other words, said inner tube comprises two circumferential volumes 3a and 3b which are separate and independent, being separated by a longitudinal wall 31 extending in a plane preferably perpendicular to the axis of rotation of the wheel, even more preferably in the equatorial plane.

This wall, and also the zones immediately surrounding it, have a rigidity greater than that of the axially outermost part, i.e. the sidewalls 32 of the inner tube, so that during inflation of the tube inside the tyre the expansion of the tube in the axial direction is greater than that in the radial direction. In this way the central portion of the inner tube comes into contact with the tread zone at the same time as its sidewalls come to rest fully against the sidewalls of the tyre, preventing the occurrence of any abnormal tensions inside the walls of the inner tube itself.

Further characteristic features of the inner tube, a method and a device for the manufacture thereof, as well as the use thereof in combination with a generic tyre, are described in full detail in a co-pending patent application, EP-B-1 030 789, in the name of the Applicants themselves; consequently, here a preferred example of embodiment thereof is provided, and reference should be made to the publication of said application for more general information.

It must be pointed out moreover that, within the scope of the present invention, the inner tube is not necessarily elliptical nor provided with independent volumes. In other words, the wheel according to the invention may equally well comprise also an inner tube with a substantially circular and/or mono-volume cross-section.

More specifically, the inner tube illustrated is particularly suitable for tyres with an elliptical cross-section, in which the dimension of the smaller axis, parallel to the equatorial plane, is smaller than the dimension of the larger axis, parallel to the axis of rotation, i.e. for those so-called "low-profile" tyres, in which the ratio between the cross-sectional height, measured between the base of the beads and the top of the tread, and the maximum width of the tyre, is equal to or less than 0.7.

In the particular embodiment of the tyre, previously described and illustrated in Figure 2, the condition expressed by this ratio must be verified along the centre line cf the tyre provided with the sidewall of greater radial extension.

More preferably, the central core consists in the wall 31 from the ends of which two flanges, respectively a radially external flange 33 (extrados flange) and a radially internal flange 34 (intrados flange), extend, perpendicularly with respect thereto, in axially opposite directions over a section of predetermined width.

The adjacent ends of the sidewalls and the flanges are jointed together, those in a radially external position along the circumferential joining lines 35, and those in a radially internal position along the circumferential joining lines 36. The joint is preferably realized by means of chemical bonding in the form of vulcanization.

In accordance with one aspect of the invention, it has been envisaged manufacturing the inner tube with a different rigidity of the separate portions, and more precisely with the core having a rigidity greater than that of the sides. In a preferred embodiment illustrated in Figure 3, where the various parts of the inner tube have been manufactured with the same elastomeric material, the greater rigidity of the core compared to the sidewalls has been obtained by suitably increasing the cross-section (thickness) of the core with respect to that of the sidewalls. The ratio between the average value of the thickness of the core and that of the sidewalls in the preferred embodiment according to the invention may vary between 1 and 4.

In more detail, in the example according to Figure 3, the inner tube has a constant thickness of 5 mm along the wall 31, which is greater in the connection zone between wall and flanges, then tapers until it reaches the thickness of 2 mm in the joining zone with the sidewalls, and then remains constant in the sidewalls.

In an alternative solution to that mentioned, the greater rigidity of the core compared to that of the sidewalls is obtained with the aid of materials which are different from one another, using for the core an elastomeric material having a modulus greater than that of the material of the sidewalls: in this case the thickness of the core may be equal to or different from that of the sidewalls.

In the preferred alternative embodiments according to the invention the ratio between the moduli of the materials respectively of the core and the sidewalls may be in the range of values between 1 and 10, and more preferably between 1 and 5.

The value of the modulus of the material of the core is preferably between 1.5 and 10 N/mm².

It is pointed out here that "modulus" is understood as meaning the nominal value of the force corresponding to an elongational deformation of 100%. The measurement of the value of the modulus is performed in accordance with the standard ISO 37 (Ring type A).

Preferably the sidewalls of the inner tube may be based on butyl rubber or butyl halogen rubber and the central core may be based on diene elastomers such as, among others, styrene butadiene, polybutadiene and natural rubber.

In a further solution, the greater rigidity of the core compared to the sidewalls may be achieved with materials of the same or a different composition and having the same or different thicknesses, by incorporating suitable reinforcing fillers in said materials; in a preferred solution these fillers comprise short fibres (dimensions equal to or less than 7 mm), in particular those obtained by grinding aramide fibres (dimensions equal or less than 1 mm) known as "aramide paste" (for example Kevlar® -Pulp or Twaron® -Pulp), where Kevlar and Twaron are registered trademarks of the companies Du Pont and AKZO, respectively.

Preferably the quantity of said short fibres is comprised between 1 and 5 phr (parts per hundred parts of rubber); in a particular preferred embodiment only the elastomeric material of the core contains such fibrous reinforcing fillers.

Preferably also the different parts of the central core are provided with a different rigidity, in one case the maximum rigidity being conferred on the intrados flange, compared to the rigidity of the wall and the extrados flange, so as to control in an optimum manner expansion of the walls of the inner tube during inflation thereof, thus allowing complete adaptation of these walls to the internal surface of the tyre.
For this purpose, preferably the inner tube is moulded and vulcanized with a toroidal shape having an internal volume not less than one third of the final volume of use and, even more preferably, the inner tube is moulded and vulcanized in an elliptical shape. Even more preferably, the wall 31 contains at least one duct 37 which extends internally over the entire radial extension of the wall, opening out on both the extrados surface and the intrados surface of the inner tube. Preferably the inner tube comprises a plurality of these ducts which are circumferentially spaced with respect to one another in a uniform manner, i.e. are mutually staggered by the same angular amount.

Preferably these ducts are at least three in number, but more preferably are a greater number, even more preferably at least six, and preferably have a diameter of between 3 mm and 15 mm, even more preferably equal to 12 mm.

Owing to the presence of these ducts, during inflation of the inner tube, the air which remains trapped between the radially external surface (extrados surface) of the inner tube and the radially internal surface of the peripheral portion of the tyre is able to flow out towards the space comprised between the radially internal surface (intrados surface) of the inner tube and the facing surface of the rim, and from here towards the external environment by means of the inflating valve 5, in the open position.

In accordance with the invention, the inner tube described here is provided with an inflating device 4 inserted in its wall, preferably the intrados wall, without any element for connection to the external environment, passing through the rim.

Various characteristic features and embodiments of a device of this type as well as the use thereof in combination with a generic type of tyre wheel have been described and illustrated in full detail in a co-pending patent application, not yet published, in the name of the Applicants themselves, so that a preferred example of embodiment thereof is illustrated here, in connection with which, for more general information, reference should be made to the publication of said application.

In general the abovementioned inflating and deflating device comprises a rigid body 41 preferably made of plastic material and provided with a group of valves, each of which is delimited by a casing which has, arranged inside it, the associated activation mechanism, i.e. the part of the valve operating between an open position and a closed position, respectively, so as to allow or prevent the flow of pressurized air in either of the two directions through the casing.

In particular, the group comprises three valves, respectively for inflation, calibration and deflation, and allows one to carry out at least three operations fundamental for providing the tyre with the correct operating pressure, namely rapid inflation to an overpressure, attainment (calibration) of the desired pressure value and rapid deflation of the inner tube.

The rigid body 41, which has a preferably cylindrical configuration, is mounted inside a special bush 42 defining a circular through-opening formed in the wall of the inner tube, preferably on the radially internal (intrados) surface.

Preferably the abovementioned rigid body comprises an annular portion of its external surface which is threaded so as to allow screwing thereof inside the bush 42 and a bottom flange 40 which allows its position to be fixed with respect to the bush.

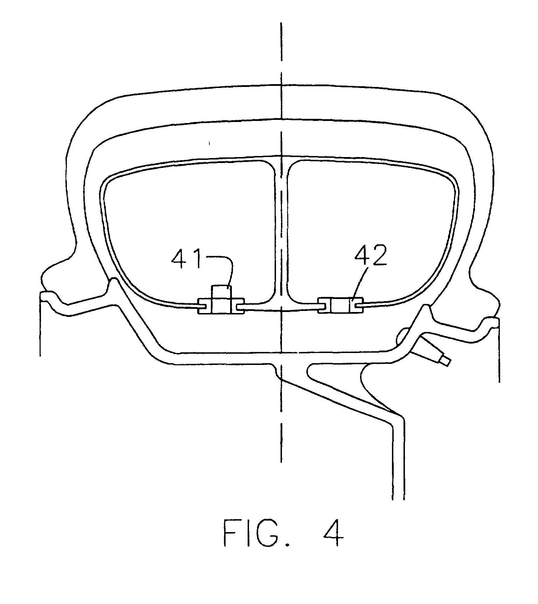

As can be clearly seen from Figures 1 and 4, the abovementioned rigid body 41 and the group of valves contained therein is completely isolated from the surrounding environment and therefore does not have any element for connection to the environment outside the wheel, passing through the wall of the rim. Moreover, the inner tube provided with such a device is free to move into any position inside the cavity delimited by the tyre and the surface of the rim.

In a preferred embodiment of the invention a single valve performs all three functions envisaged, namely inflation, calibration and deflation, with the result that the device is light, compact and occupies a limited amount of space.

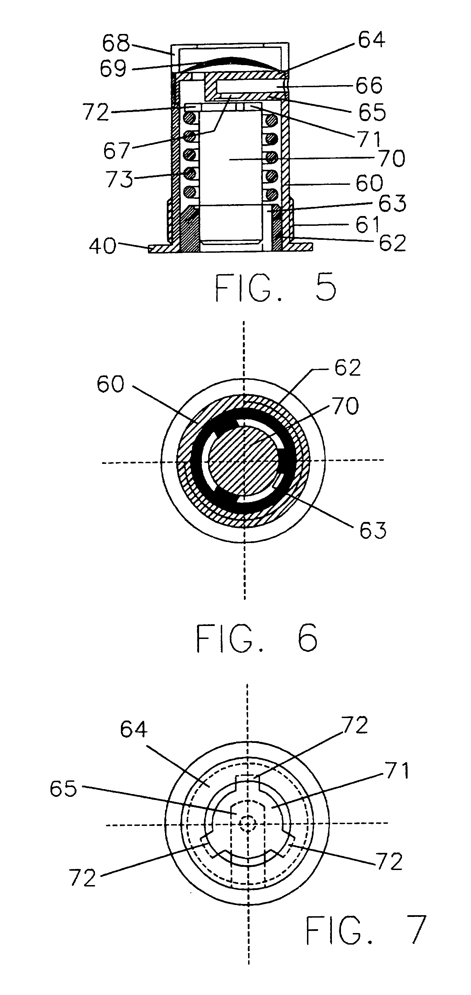

This valve (Figure 5) preferably comprises a cylindrical casing 60 flanged on the end projecting outside the inner tube and provided with an external threading 61 or any other equivalent form of fastening (rapid coupling, etc.) in the vicinity of said flanged end for mounting inside the bush 42 already described.

A ring 62 is mounted inside said flanged end by means of screwing or in some other advantageous manner and is provided with at least two, but preferably three or more projections 63 (Figure 6) projecting radially towards the inside.

The axially opposite end of the cylindrical casing 60 is closed by a circular crown 64 (Figure 7) integral with a duct 65 welded onto the axially internal surface of said crown and provided with two openings, respectively 66 on the side surface of the cylindrical casing and 67 on the side surface of the duct, directed towards the flanged end of the casing and preferably coaxial therewith.

A bowl-shaped cage 68 is screwed, or otherwise fixed, in a coaxial position, on the circular crown 64, and a lens-shaped element 69, with its concavity directed towards the cylindrical casing, is movable inside the bowl and rests on the circular crown.

A coaxial stem 70 is arranged inside the cylindrical body 60 and is axially slidable and in particular guided between the projections 63 of the ring 62: the axial surface of the stem directed towards the circular crown is integral with a disc 71 which preferably has a diameter greater than that of the stem 70 and even more preferably is provided with lugs 72 radially projecting in cantilever fashion from the periphery of the disc. The abovementioned stem 70 is preferably a permanent magnet made of sintered alloy, preferably comprising ferromagnetic material.

Finally, a compressed spring 73 surrounds the stem 70, resting against the ring 62 at one end and against the projecting edge of the disc 71, and/or against the lugs 72, at the other end.

The thrusting force of the spring is calibrated on the basis of the operating pressure of the tyre and hence the inner tube.

During the inflation stage, the pressurized air acting outside the inner tube flows into the cylindrical body, passing between the side surface of the stem 70 and the ring 62 and, from here, passing by the disc 71 and flowing through the circular crown 64, displaces the lens-shaped element 69 from its rest position on the rim and enters into the inner tube, passing through the cage 68 which exclusively performs the function of retaining the lens-shaped element within a predetermined space.

As soon as the pressure acting inside the inner tube exceeds the value of the external pressure, the lens-shaped element is compressed against the circular crown, closing its central hole, so as to prevent air passing from inside to outside the inner tube.

If the value of said internal pressure exceeds the calibration value of the spring, the pressurized air which is inside the duct, in communication with the inner tube via the hole 66, compresses the spring, displacing the disc 71 and the associated stem 70 away from the duct, thus allowing the air to flow out through the hole 67 towards the flanged end of the cylindrical body and from here into the outside environment.

As soon as the internal pressure, decreasing in value, has become less than the calibration value of the spring, the latter extends, bringing back immediately the disc 71 against the duct 65 so as to close the hole 67.

Should one wish to perform rapid deflation of the inner tube it is sufficient to apply a magnetic field which acts on the stem 70, drawing it towards the flanged end of the cylindrical body, so as to displace the disc 71 and open the hole 67, as already described.

The magnetic field will keep the pin in the open position of the hole for the whole of the period required by the operator.

Having now understood the invention, the person skilled in the art is able to design and manufacture other types of valves which do not have elements for connection to the external environment, in accordance with the invention, and which are able to perform at least the three functions described here.

For example, it could be possible to replace the simple magnetic actuator of the deflating valve with an active device, for example a miniaturized solenoid valve, and a radio-wave or ultrasound receiver designed to operate the solenoid valve after receiving a suitable coded signal.

The solenoid valve could be of the electromagnetic type, or comprise phase-changing actuators, fusible diaphragms, components made of shape-retaining material, electric micromotors, piezoelectric actuators and other similar devices.

The mode of operation of the wheel assembly and the many advantages achieved by it may now be easily understood.

Firstly, under normal travel conditions, the particular carcass profile produced by the maximum axial width in the region of the beads, allows the tyre to maximize the slip thrust with an advantageous effect on the quality of the driving performance.

As regards the capacity to prevent unseating, it must be remembered first of all that, during run-flat conditions, particularly along a curved trajectory, a very high axial thrust, directed towards the inside of the tyre, acts on the bead on the outside of the bend, while a thrust directed towards the outside, but of a more limited value, acts on the bead on the inside of the bend.

In the wheel according to the invention, the thrust towards the inside is effectively opposed by the shoulder 15 which cannot be passed over by the bead since the minimum diameter of the reinforcing bead core is less than the diameter of the shoulder. On the other hand, the radially external diameter of the flange 14 is substantially equal to or less than the minimum diameter of the bead core, but in this direction, i.e. axially towards the outside, the limited value of the thrust applied to the bead is insufficient to cause the bead to be dislodged from its seat and the flange 14 to be passed over, in view of the rigidity and the consequent indeformability of the structure of the bead as a whole.

These dimensions of the shoulder and the flange on the bead seats do not constitute, however, an obstacle for mounting and removing the tyre which, on the contrary, can be performed more easily compared to the wheels of the state of the art.

The method for mounting and inflating the tyre 2 on the rim 1 involves initially the step of fitting a first bead on the rim until it is arranged in the associated bead seat.

The first bead of the tyre is made to pass over the two shoulders by ovalizing the bead core and making use of the central channel present on the rim in order to offset the axis of the tyre with respect to the rim. Then the inner tube, already provided with its inflating device, is introduced into the space, not yet closed, delimited between tyre and rim and then the second bead is fitted onto the rim by inserting it into the associated bead seat.

Passing of the second bead over the flange is facilitated by the value of the ratio between the mutual diameters.

The embodiment illustrated in Figure 2 further facilitates assembly of the wheel with a low-profile tyre: insertion of the inner tube inside the tyre, passing it through the space delimited between a bead of the tyre and the flange of the corresponding bead seat, could prove to be difficult in the case of a symmetrical rim. Instead, in the asymmetrical wheel according to the invention, during fitting of the tyre onto the rim, the bead of maximum diameter is first inserted into the bead seat of minimum diameter and this greater space between the bead seat of the rim and the bead of the tyre allows easier insertion of the inner tube into the wheel cavity.

Advantageously, the greater ease of insertion of the inner tube into the abovementioned cavity results in a substantial saving in time and greater appeal of the product to personnel who carry out maintenance and replacement operations.

In the wheel according to the invention, the means for introducing and removing air comprise the usual valve for inflating tubeless tyres essentially consisting of a tubular element 51 containing the activation mechanism for the inflating and deflating operations and having one end incorporated in a rubber plug 52 inserted in an airtight manner inside a corresponding hole in the rim wall and provided at the opposite end with a special closing cap, not shown.

In order to inflate the wheel according to the invention, the cap is removed from the tubular element 51 and, using any tool, for example an ordinary compressed-air supply gun provided with a pressure gauge, pressurized air is introduced inside the space between tyre and rim.

The pressure value of the air introduced is chosen so as to be sufficiently high, preferably between 150% and 200% of the operating pressure. As soon as the fixed pressure value is reached, which can be easily detected using any known device (pressure gauge), the introduction of pressurized air is stopped.

The high-pressure air initially deforms the inner tube, basically compressing it onto itself; however, the inner tube, having been advantageously moulded with a torus shape, memorizes this shape and reacts to the deformation, generating internal tensions which cause it to reassume its toroidal configuration.

This reaction to compression is further favoured by the presence of the central core which has a greater rigidity than that of the sidewalls.

In these conditions a pressure which is lower than the external pressure of the cavity is created inside the inner tube, with a consequent flow of air towards the inside of the tube via the inflating device according to the invention. As the internal volume of the tube is gradually filled with pressurized air, the tube dilates gradually returning to its moulded shape until it reaches, after a certain period of time, a pressure equilibrium between the inside of the tube and the external cavity between tyre and rim.

The air inlet tool is now removed from the tubular element 51 so that all the pressurized air contained in the cavity is discharged through the latter, so that this cavity assumes the value of atmospheric pressure.

The difference in pressure between the inside of the inner tube and the cavity completes dilation of the inner tube 3 until the intrados surface of the latter is pressed up against the bottom surface of the rim.

Since the pressure reached inside the inner tube is greater than the predetermined operating pressure, the calibration valve opens, as described above, and then closes again, isolating the inside of the inner tube from the external environment, when the difference between the pressure inside and the pressure outside the inner tube, corresponding to the atmospheric pressure since the cap of the valve 5 has been removed, corresponds to the working pressure on the basis of which calibration of the inflating device was performed.

Once the operation of inflation of the inner tube and calibration of the pressure to the predefined value has been performed, the closing cap is applied onto the tubular element 51, also isolating the wheel cavity from the external environment.

If the pressure inside the inner tube must be increased, for example in order to restore the value of the working pressure, the inflation procedure described above is repeated from the start.

Rapid deflation of the inner tube, as already seen, is performed by causing displacement of the obturator of the device from its closing position.

The inflating and deflating device according to the invention offers numerous advantages compared to the valves associated with an inner tube according to the state of the art.

This is because owing to the absence of elements connecting the inner tube and the environment outside the wheel, said device always remains intact and perfectly functional, eliminating the deflation caused by slipping of the tyre on the rim or other accidental factors, for example impacts of the part projecting from the rim of conventional valves against obstacles in the road, or other problems such as the loss of the closing cap.

Moreover proper inflation of the inner tube is advantageously ensured by the fact that the calibration function is no longer performed manually by an operator, but is assigned to an automatic device which ensures precisely predefined working pressure values which are always the same for each inner tube inflating operation.

Moreover the inflating device according to the invention, which does not have parts associated with the inner tube and projecting from the rim, allows the inner tube to be arranged rapidly and without distortion inside the cavity between tyre and rim.

In fact, the present characteristic embodiment of the inflating valve eliminates the complex and difficult operations which are required with the conventional valves according to the state of the art in order to insert the stem of the valve of the inner tube from inside the cavity between tyre and rim towards the outside, through the appropriate hole provided on the rim.

The inner tube with at least two independent compartments forms a safety device which is able to provide the tyre with stability and supporting properties even when one of the compartments is partially or totally deflated following a puncture. The presence of several independent compartments allows the tyre to be kept at an adequate inflation pressure suitable for ensuring good travel characteristics (speed, distance and comfort) even during emergency travel conditions.

Preferably, in this case, each compartment is provided with its own device as described and illustrated above.

Advantageously, owing to the characteristic features of the invention, rapid and easy extraction of the inner tube from the wheel is obtained when it is required to replace the tyre, the inner tube or its inflating device which is mounted in the wall of the tube so as to be easily separable therefrom.

## Claims

1. Tyre wheel for vehicles comprising a mounting rim (1) which can be associated with a hub of said vehicle, a tyre (2) mounted on said rim (1) and comprising a toroidal carcass provided with a crown portion connected to a pair of axially facing sidewalls (22) terminating in beads (23) for engagement with corresponding bead seats formed on the mounting rim (1), said carcass being provided with at least one reinforcing ply (29) extending from bead to bead, with its ends fixed to reinforcing bead cores (24) inserted inside said beads, the assembly of said tyre and said rim defining a toroidal cavity which can be isolated from the surrounding environment at atmospheric pressure, and an inner tube (3) which is inserted in said cavity and can be elastically expanded by means of the introduction of fluid under pressure into its internal volume and is provided with an inflating and deflating device which is inserted in the wall of said inner tube (3), said rim (1) comprising a substantially cylindrical body (12), the axis of which forms the axis of rotation of said wheel, the radially external surface of said body having two side portions (11) designed to form said bead seats for engagement with corresponding beads (23) of said tyre (2), said device having no system for connection to said rim (1), designed to fix the circumferential position of said inner tube (3) with respect to the rim (1), said inner tube (3) comprises at least two circumferential volumes (3a, 3b) separated by a longitudinal wall (31), said wheel being **characterized in that**: each of the two side portions (11) of the body is arranged according to a conical surface with its apex on said axis of rotation in a position axially outside said seat with respect to said rim (1), and **in that** the radially external surface of the body has a radially more inward central portion with a maximum diameter less than the minimum diameter of said conical side portions; said tyre (2) has a width in the region of said beads (23) at least equal to its maximum width in the region of said sidewalls (22); said wall (31) having a rigidity which is greater than that of the sidewalls of said inner tube (3).

2. Tyre wheel according to Claim 1, **characterized in that** it comprises, on the rim (1), means for introducing and removing fluid under pressure respectively into and from said toroidal cavity.

3. Tyre wheel according to Claim 1, **characterized in that** the angle (w) of said conical surfaces with respect to the axis of rotation is between 4° and 30°.

4. Tyre wheel according to Claim 1, **characterized in that** said bead seats are axially delimited towards the outside each by a flange (14) diverging in a direction radially outside the rim (1) and inclined with respect to the equatorial plane at an angle (x) of between 40° and 50°.

5. Tyre wheel according to Claim 1, **characterized in that** said bead seats are axially delimited towards the inside each by a shoulder (15), with its axially external surface converging towards the equatorial plane in a direction radially outside the rim (1) and inclined with respect to said plane at an angle of between 0° and 30°.

6. Tyre wheel according to Claim 1, **characterized in that** the difference between the maximum diameter of said central portion, on the radially external surface of the abovementioned cylindrical body, and the minimum diameter of the bead seats is between 10% and 20% of the value of said minimum diameter of the bead seats.

7. Tyre wheel according to Claim 4, **characterized in that** the difference between the external diameter of said flange (14) and the minimum diameter of the corresponding bead seat is between 1% and 5% of the value of said minimum diameter.

8. Tyre wheel according to Claim 1, **characterized in that** said bead seats have a different distance from the axis of rotation of said wheel, the difference between the minimum diameter of the bead seat of larger diameter and the maximum diameter of the bead seat of smaller diameter, which is axially opposite, being between 3% and 6% of the value of said maximum diameter.

9. Tyre wheel according to Claim 8, **characterized in that** said rim (1) is designed for mounting on the vehicle with the bead seat of larger diameter facing the vehicle itself.

10. Tyre wheel according to Claim 1, **characterized in that** said bead reinforcing core (24) comprises at least two radially superimposed layers (241, 242) of metal wires which are wound in turns arranged axially alongside one another and extending substantially over the entire axial extension of the corresponding bead seat and are arranged substantially parallel to the surface of the bead seat.

11. Tyre wheel according to Claim 10, **characterized in that** said layers (241, 242) are formed by wires made of steel with a high carbon content.

12. Tyre wheel according to Claim 10, **characterized in that** said layers (241, 242) comprise a spiral of a single metal wire, with a diameter of between 0.9 mm and 1.5 mm.

13. Tyre wheel according to Claim 10, **characterized in that** said layers (241, 242) comprise a spiral of stranded metal cord, the basic filaments of said strands having a diameter of between 0.22 mm and 0.38 mm.

14. Tyre wheel according to Claim 13, **characterized in that** said cord comprises seven strands of three filaments each, said filaments having a diameter of between 0.28 mm and 0.36 mm.

15. Tyre wheel according to Claim 10, **characterized in that** said bead core (24) comprises a combination of layers of single filaments and layers of cords.

16. Tyre wheel according to Claim 10, **characterized in that** the minimum diameter of the radially innermost layer is not less than the diameter of the adjacent flange and its maximum diameter is not greater than the diameter of the adjacent shoulder.

17. Tyre wheel according to Claim 10, **characterized in that** the end of said carcass ply is inserted, axially from the inside outwards, between the abovementioned layers (241, 242).

18. Tyre wheel according to Claim 17, **characterized in that** the end of said carcass ply comprises two axially separate portions of fabric, a first portion of fabric being arranged in position radially inside the radially innermost layer of metal wires, a second portion of fabric being inserted in position radially inside the radially outermost layer of said wires, separated from the radially innermost layer by an insert of elastomeric material.

19. Tyre wheel according to Claim 18, **characterized in that** said insert extends radially beyond the axially internal end of said layers of metal wires towards the sidewall of the tyre.

20. Tyre wheel according to Claim 18, **characterized in that** the hardness of said insert is not less than 70° Shore A.

21. Tyre wheel according to Claim 1, **characterized in that** said inner tube (3) has been moulded and vulcanized with a toroidal shape having an internal volume not less than one third of the final volume of use.

22. Tyre wheel according to Claim 1, **characterized in that** said inner tube (3) has been moulded and vulcanized with an elliptical shape.

23. Tyre wheel according to Claim 1, **characterized in that** said longitudinal wall (31) is extended in a plane perpendicular to the axis of rotation of the wheel.

24. Tyre wheel according to Claim 1, **characterized in that** each of said circumferential volumes (3a, 3b) is provided with said inflating device.

25. Tyre wheel according to Claim 1, **characterized in that** this wall (31) contains at least one duct (37) which extends internally over the whole radial extension of the wall (31), opening out on both the extrados and intrados surfaces of the inner tube (3).

26. Tyre wheel according to Claim 1, **characterized in that** said inflating and deflating device comprises a rigid body (41) incorporating an inflating valve, a calibration valve and a discharge valve.

## Patentansprüche

1. Bereiftes Rad für Fahrzeuge
- mit einer Montagefelge (1), die mit einer Nabe des Fahrzeugs verbunden werden kann,
- mit einem Reifen (2), der auf der Felge (1) angeordnet ist und eine toroidförmige Karkasse aufweist, die mit einem Kronenabschnitt versehen ist, der mit einem Paar von axial zugewandten Seitenwänden (22) verbunden ist, die in Wulsten (23) für einen Eingriff mit entsprechenden Wulstsitzen enden, die auf der Montagefelge (1) ausgebildet sind, wobei die Karkasse mit wenigstens einer Verstärkungslage (29) versehen ist, die sich von Wulst zu Wulst erstreckt und deren Enden an verstärkenden Wulstkemen (24) befestigt sind, die in die Wulste eingelegt sind,
- wobei die Anordnung aus Reifen und Felge einen toroidförmigen Hohlraum bildet, der von der Außenumgebung bei Atmosphärendruck getrennt werden kann, und
- mit einem inneren Schlauch (3), der in den Hohlraum eingelegt ist und mit Hilfe der Einführung eines Druckfluids in seinen Innenraum elastisch ausgeweitet werden kann und der mit einer Füll- und Entleervorrichtung versehen ist, die in die Wand des inneren Schlauchs (3) eingesetzt ist,
- wobei die Felge (1) ein im wesentlichen zylindrisches Gehäuse (21) hat, dessen Achse die Drehachse des Rades bildet, und die radial äußere Fläche des Gehäuses zwei Seitenabschnitte (11) hat, die zur Bildung der Wulstsitze für den Eingriff mit entsprechenden Wulsten (23) des Reifens ausgelegt sind,
- wobei die Vorrichtung kein System für eine Verbindung mit der Felge (1) hat, das so ausgelegt ist, dass es die Umfangsposition des inneren Schlauchs (3) bezüglich der Felge (1) festlegt,
- wobei der innere Schlauch (3) wenigstens zwei Umfangsräume (3a, 3b) hat, die durch eine Längswand (31) getrennt sind und
- wobei sich das Rad dadurch auszeichnet,
- dass jeder der beiden Seitenabschnitte (11) des Gehäuses entsprechend einer konischen Fläche angeordnet ist, deren Scheitel auf der Drehachse in einer Position axial außerhalb des Sitzes bezogen auf die Felge (1) liegt, und
- dass die radial äußere Oberfläche des Gehäuses einen radial weiter innen befindlichen zentralen Abschnitt mit einem maximalen Durchmesser hat, der kleiner ist als der minimale Durchmesser der konischen Seitenabschnitte,
- wobei der Reifen (2) eine Breite im Bereich der Wulste (23) hat, die wenigstens gleich seiner maximalen Breite im Bereich der Seitenwände (22), ist und
- wobei die Wand (31) eine Steifigkeit hat, die größer ist als diejenige der Seitenwände des inneren Schlauchs (3).

2. Bereiftes Rad nach Anspruch 1, **dadurch gekennzeichnet, dass** es an der Felge (1) Einrichtungen zum Einführen und Abführen von Druckfluid in den toroidförmigen Hohlraum beziehungsweise aus diesem aufweist.

3. Reifen nach Anspruch 1, **dadurch gekennzeichnet, dass** der Winkel (w) der konischen Flächen bezogen auf die Drehachse zwischen 4° und 30° beträgt.

4. Bereiftes Rad nach Anspruch 1, **dadurch gekennzeichnet, dass** die Wulstsitze nach außen hin jeweils durch einen Flansch (14) axial begrenzt sind, der in eine Richtung radial nach außen von der Felge (1) divergiert und bezüglich der Äquatorialebene mit einem Winkel (x) zwischen 40° und 50° geneigt ist.

5. Bereiftes Rad nach Anspruch 1, **dadurch gekennzeichnet, dass** die Wulstsitze nach innen hin jeweils durch eine Schulter (15) axial begrenzt sind, deren axial äußere Fläche zu der Äquatorialebene in eine Richtung radial nach außen von der Felge (1) konvergiert und bezüglich der Ebene mit einem Winkel zwischen 0° und 30° geneigt ist.

6. Bereiftes Rad nach Anspruch 1, **dadurch gekennzeichnet, dass** die Differenz zwischen dem maximalen Durchmesser des zentralen Abschnitts auf der radial äußeren Fläche des oben genannten zylindrischen Gehäuses und dem minimalen Durchmesser der Wulstsitze zwischen 10% und 20% des Wertes des minimalen Durchmessers der Wulstsitze beträgt.

7. Bereiftes Rad nach Anspruch 4, **dadurch gekennzeichnet, dass** die Differenz zwischen dem Außendurchmesser des Flansches (14) und dem minimalen Durchmesser des entsprechenden Wulstsitzes zwischen 1% und 5% des Werts des minimalen Durchmessers beträgt.

8. Bereiftes Rad nach Anspruch 1, **dadurch gekennzeichnet, dass** die Wulstsitze eine unterschiedliche Entfernung von der Drehachse des Rades haben, wobei die Differenz zwischen dem minimalen Durchmesser des Wulstsitzes mit dem größeren Durchmesser und dem maximalen Durchmesser des Wulstsitzes mit dem kleineren Durchmesser, der sich axial gegenüberliegend befindet, zwischen 3% und 6% des Werts des maximalen Durchmessers beträgt.

9. Bereiftes Rad nach Anspruch 8, **dadurch gekennzeichnet, dass** die Felge (1) für ein solches Anbringen an dem Fahrzeug ausgelegt ist, dass der Wulstsitz mit dem größeren Durchmesser dem Fahrzeug zugewandt ist.

10. Bereiftes Rad nach Anspruch 1, **dadurch gekennzeichnet, dass** der den Wulst verstärkende Kern (24) wenigstens zwei radial übereinandergelegte Lagen (241, 242) von Metalldrähten aufweist, die in Windungen gelegt sind, die axial längs einander angeordnet sind und sich im wesentlichen über die gesamte axiale Erstreckung des entsprechenden Wulstsitzes erstrecken und im wesentlichen parallel zur Oberfläche des Wulstsitzes angeordnet sind.

11. Bereiftes Rad nach Anspruch 10, **dadurch gekennzeichnet, dass** die Lagen (241, 242) von Drähten aus Stahl mit einem hohen Kohlenstoffgehalt gebildet werden.

12. Bereiftes Rad nach Anspruch 10, **dadurch gekennzeichnet, dass** die Lagen (241, 242) eine Wendel eines einzigen Metalldrahts aufweist, der einen Durchmesser zwischen 0,9 mm und 1,5 mm hat.

13. Bereiftes Rad nach Anspruch 10, **dadurch gekennzeichnet, dass** die Lagen (241, 242) eine Wendel eines verlitzten Metallkords aufweisen, wobei die Basisfilamente der Litzen einen Durchmesser zwischen 0,22 mm und 0,38 mm haben.

14. Bereiftes Rad nach Anspruch 13, **dadurch gekennzeichnet, dass** der Kord sieben Litzen mit jeweils drei Filamenten aufweist, wobei die Filamente einen Durchmesser zwischen 0,28 mm und 0,36 mm haben.

15. Bereiftes Rad nach Anspruch 10, **dadurch gekennzeichnet, dass** der Wulstkern (24) eine Kombination aus Lagen aus Einzelfilamenten und Lagen von Korden aufweist.

16. Bereiftes Rad nach Anspruch 10, **dadurch gekennzeichnet, dass** der minimale Durchmesser der radial innersten Lage nicht kleiner ist als der Durchmesser des benachbarten Flansches und dass ihr minimaler Durchmesser nicht größer als der Durchmesser der benachbarten Schulter ist.

17. Bereiftes Rad nach Anspruch 10, **dadurch gekennzeichnet, dass** das Ende der Karkassenlage axial von innen nach außen zwischen die erwähnten Lagen (241, 242) eingelegt ist.

18. Bereiftes Rad nach Anspruch 17, **dadurch gekennzeichnet, dass** die Endseite der Karkassenlage zwei axial getrennte Gewebeabschnitte aufweist, wobei ein erster Gewebeabschnitt in einer Position radial innerhalb der radial innersten Lage von Metalldrähten angeordnet ist, während ein zweiter Gewebeabschnitt in einer Position radial innerhalb der radial äußersten Lage der Drähte eingelegt ist, die von der radial innersten Lage durch eine Einlage aus elastomerem Material getrennt ist.

19. Bereiftes Rad nach Anspruch 18, **dadurch gekennzeichnet, dass** sich die Einlage radial über das axial innere Ende der Lagen aus Metalldrähten hinaus zu der Seitenwand des Reifens erstreckt.

20. Bereiftes Rad nach Anspruch 18, **dadurch gekennzeichnet, dass** die Härte der Einlage nicht weniger als 70° Shore A beträgt.

21. Bereiftes Rad nach Anspruch 1, **dadurch gekennzeichnet, dass** der innere Schlauch (3) mit einer Toroidform ausgeformt und vulkanisiert ist, die ein Innenvolumen hat, das nicht kleiner ist als ein Drittel des Verwendungs-Endvolumens.

22. Bereiftes Rad nach Anspruch 1, **dadurch gekennzeichnet, dass** der innere Schlauch (3) mit einer elliptischen Form ausgeformt und vulkanisiert ist.

23. Bereiftes Rad nach Anspruch 1, **dadurch gekennzeichnet, dass** die Längswand (31) sich in einer Ebene senkrecht zur Drehachse des Rads erstreckt.

24. Bereiftes Rad nach Anspruch 1, **dadurch gekennzeichnet, dass** jeder der Umfangsräume (3a, 3b) mit der Füllvorrichtung versehen ist.

25. Bereiftes Rad nach Anspruch 1, **dadurch gekennzeichnet, dass** die Wand (31) wenigstens einen Kanal (37) enthält, der sich innen über den ganzen radialen Verlauf der Wand (31) erstreckt und sowohl auf der außenliegenden Fläche als auch auf der innenliegenden Fläche des inneren Schlauchs (3) mündet.

26. Bereiftes Rad nach Anspruch 1, **dadurch gekennzeichnet, dass** die Füll- und Entleervorrichtung ein starres Gehäuse (41) mit einem Füllventil, einem Kalibrierventil und einem Auslassventil aufweist.

## Revendications

1. Roue équipée d'un pneu pour véhicules, comprenant une jante (1) qui peut être associée à un moyeu dudit véhicule, un pneu (2) monté sur ladite jante (1) et comprenant une carcasse toroïdale munie d'une partie de sommet connectée à une paire de flancs se faisant face axialement (22) se terminant en talons (23) prévus pour se mettre en prise avec des sièges de talon correspondants formés sur la jante (1), ladite carcasse étant munie d'au moins un pli de renforcement (29) s'étendant d'un talon à l'autre, ses extrémités étant fixées à des âmes de talon de renforcement (24) insérées à l'intérieur desdits talons, l'assemblage dudit pneu et de ladite jante définissant une cavité toroïdale qui peut être isolée du milieu environnant à la pression atmosphérique, et une chambre à air (3) qui est insérée dans ladite cavité et peut être gonflée de manière élastique par introduction d'un fluide sous pression dans son volume interne et est munie d'un dispositif de gonflage et de dégonflage qui est inséré dans la paroi de ladite chambre à air (3), ladite jante (1) comprenant un corps sensiblement cylindrique (12), dont l'axe forme l'axe de rotation de ladite roue, la surface radialement externe dudit corps comportant deux parties latérales (11) conçues pour former lesdits sièges de talon destinés à se mettre en prise avec les talons correspondants (23) dudit pneu (2), ledit dispositif n'ayant pas de système pour sa connexion à ladite jante (1), conçu pour fixer la position circonférentielle de ladite chambre à air (3) par rapport à la jante (1), ladite chambre à air (3) comprend au moins deux volumes circonférentiels (3a, 3b) séparés par une paroi longitudinale (31), ladite roue étant **caractérisée en ce que** : chacune des deux parties latérales (11) du corps est agencée selon une surface conique avec son sommet sur ledit axe de rotation dans une position axialement à l'extérieur dudit siège par rapport à ladite jante (1), et **en ce que** la surface radialement externe du corps a une partie centrale radialement plus à l'intérieur avec un diamètre maximum inférieur au diamètre minimum desdites parties latérales coniques, ledit pneu (2) a une largeur dans la région desdits talons (23) au moins égale à sa largeur maximale dans la région desdits flancs (22), ladite paroi (31 ) ayant une rigidité qui est supérieure à celle des flancs de ladite chambre à air (3).

2. Roue équipée d'un pneu selon la revendication 1, **caractérisée en ce qu'**elle comprend, sur la jante (1), un moyen servant à introduire et à retirer du fluide sous pression respectivement dans et de ladite cavité toroïdale.

3. Roue équipée d'un pneu selon la revendication 1, **caractérisée en ce que** l'angle (w) desdites surfaces coniques par rapport à l'axe de rotation est compris entre 4° et 30°.

4. Roue équipée d'un pneu selon la revendication 1, **caractérisée en ce que** lesdits sièges de talon sont délimités chacun axialement vers l'extérieur par une bride (14) qui diverge dans une direction radialement extérieure à la jante (1) et inclinée par rapport au plan équatorial selon un angle (x) compris entre 40° et 50°.

5. Roue équipée d'un pneu selon la revendication 1, **caractérisée en ce que** lesdits sièges de talon sont délimités chacun axialement vers l'intérieur par un épaulement (15), sa surface axialement externe convergeant vers le plan équatorial dans une direction radialement extérieure à la jante (1) et inclinée par rapport audit plan d'un angle compris entre 0° et 30°.

6. Roue équipée d'un pneu selon la revendication 1, **caractérisée en ce que** la différence entre le diamètre maximum de ladite partie centrale, sur la surface radialement externe dudit corps cylindrique, et le diamètre minimum des sièges de talon vaut entre 10 % et 20 % de la valeur dudit diamètre minimum des sièges de talon.

7. Roue équipée d'un pneu selon la revendication 4, **caractérisée en ce que** la différence entre le diamètre extérieur de ladite bride (14) et le diamètre minimum du siège de talon correspondant vaut entre 1% et 5% de la valeur dudit diamètre minimum.

8. Roue équipée d'un pneu selon la revendication 1, **caractérisée en ce que** lesdits sièges de talon sont à une distance différente de l'axe de rotation de ladite roue, la différence entre le diamètre minimum du siège de talon de plus grand diamètre et le diamètre maximum du siège de talon de plus petit diamètre, qui est axialement opposé, valant entre 3 % et 6% de la valeur dudit diamètre maximum.

9. Roue équipée d'un pneu selon la revendication 8, **caractérisée en ce que** ladite jante (1) est conçue pour être montée sur le véhicule avec le siège de talon de plus grand diamètre tourné vers le véhicule.

10. Roue équipée d'un pneu selon la revendication 1, **caractérisée en ce que** ladite âme de renforcement de talon (24) comprend au moins deux couches superposées radialement (241, 242) de fils métalliques qui sont enroulés en spires agencées axialement les unes à côté des autres et s' étendant sensiblement sur toute l'étendue axiale du siège de talon correspondant et sont agencées sensiblement parallèlement à la surface du siège de talon.

11. Roue équipée d'un pneu selon la revendication 10, **caractérisée en ce que** lesdites couches (241, 242) sont formées par des fils en acier à teneur élevée en carbone.

12. Roue équipée d'un pneu selon la revendication 10, **caractérisée en ce que** lesdites couches (241, 242) comprennent une spirale d'un seul fil métallique, avec un diamètre compris entre 0,9 mm et 1,5 mm.

13. Roue équipée d'un pneu selon la revendication 10, **caractérisée en ce que** lesdites couches (241, 242) comprennent une spirale d'un fil câblé métallique toronné, les filaments de base desdits torons ayant un diamètre compris entre 0,22 mm et 0,38 mm.

14. Roue équipée d'un pneu selon la revendication 13, **caractérisée en ce que** ledit fil câblé comprend sept torons de trois filaments chacun, lesdits filaments ayant un diamètre compris entre 0,28 mm et 0,36 mm.

15. Roue équipée d'un pneu selon la revendication 10, **caractérisée en ce que** ladite âme de talon (24) comprend une combinaison de couches de filaments simples et de couches de fils câblés.

16. Roue équipée d'un pneu selon la revendication 10, **caractérisée en ce que** le diamètre minimum de la couche radialement la plus intérieure n'est pas inférieur au diamètre de la bride adjacente et son diamètre maximum n'est pas supérieur au diamètre de l'épaulement adjacent.

17. Roue équipée d'un pneu selon la revendication 10, **caractérisée en ce que** l'extrémité dudit pli de carcasse est insérée, axialement depuis l'intérieur vers l'extérieur, entre lesdites couches (241, 242).

18. Roue équipée d' un pneu selon la revendication 17, **caractérisée en ce que** l'extrémité dudit pli de carcasse comprend deux parties en toile séparées axialement, une première partie de toile étant disposée en une position radialement à l'intérieur de la couche radialement la plus intérieure de fils métalliques, une seconde partie de toile étant insérée en une position radialement à l'intérieur de la couche radialement la plus extérieure desdits fils, séparée de la couche radialement la plus intérieure par un insert en matériau élastomère.

19. Roue équipée d'un pneu selon la revendication 18, **caractérisée en ce que** ledit insert s'étend radialement au-delà de l'extrémité axialement interne desdites couches de fils métalliques vers le flanc du pneu.

20. Roue équipée d'un pneu selon la revendication 18, **caractérisée en ce que** la dureté dudit insert est supérieure ou égale à 70° Shore A.

21. Roue équipée d'un pneu selon la revendication 1, **caractérisée en ce que** ladite chambre à air (3) 'a été moulée et vulcanisée avec une forme toroïdale ayant un volume interne supérieur ou égal à un tiers du volume d'utilisation final.

22. Roue équipée d'un pneu selon la revendication 1, **caractérisée en ce que** ladite chambre à air (3) a été moulée et vulcanisée avec une forme elliptique.

23. Roue équipée d'un pneu selon la revendication 1, **caractérisée en ce que** ladite paroi longitudinale (31) s'étend dans un plan perpendiculaire à l'axe de rotation de la roue.

24. Roue équipée d'un pneu selon la revendication 1, **caractérisée en ce que** chacun desdits volumes circonférentiels (3a, 3b) est muni dudit dispositif de gonflage.

25. Roue équipée d'un pneu selon la revendication 1, **caractérisée en ce que** cette paroi (31) contient au moins un conduit (37) qui s'étend intérieurement sur toute l'étendue radiale de la paroi (31), débouchant à la fois sur les surfaces d'extrados et d'intrados de la chambre à air (3).

26. Roue équipée d'un pneu selon la revendication 1, **caractérisée en ce que** ledit dispositif de gonflage et de dégonflage comprend un corps rigide (41) comportant une valve de gonflage, une valve d'étalonnage et une valve d'évacuation.
